# EUROPÄISCHE PATENTANMELDUNG

(11) **EP 4 537 733 A1**
(43) Veröffentlichungstag der Anmeldung: **16.04.2025**
(21) Anmeldenummer: 24201081.7
(22) Anmeldetag: 18.09.2024
(51) Int. Cl.: A47L 15/50, A47L 15/42, F21V 8/00

(54) **BELEUCHTUNGSEINRICHTUNG**

(30) Priorität: 09.10.2023 DE 102023127482
(71) Anmelder: Miele & Cie. KG, 33332 Gütersloh (DE)
(72) Erfinder: KRENZIEN, Henning, 49176 Hilter (DE); Sgurski, Eugen, 32791 Lage (DE); Wegerhoff, Jessica, 32278 Kirchlengern (DE); Dobbertin, Frank, 33613 Bielefeld (DE); Eberhard, Jens, 32657 Lemgo (DE); REILMANN, Michael, 33659 Bielefeld (DE)

(57) **Zusammenfassung**

Die Erfindung betrifft eine Beleuchtungseinrichtung für einen Beladungskörper, insbesondere Spülkorb, einer Geschirrspülmaschine, mit einem plattenförmig ausgebildeten Blendenelement (6) das eine Frontseite (37) und eine Rückseite (38) aufweist, mit einem schalenförmig ausgebildeten Gehäuse (8), das unter Zwischenordnung einer Dichtung (10) rückseitig des Blendenelements (6) am Blendenelement (6) anliegt, und mit einem vom Gehäuse (8) aufgenommenen Lichtleiter (9) aus einem transparenten und/oder transluzenten Kunststoffmaterial, wobei das Blendenelement (6) Durchbrüche (7) aufweist, in die vom Lichtleiter (9) bereitgestellte Vorsprünge (12) formschlüssig eingreifen.

## Beschreibung

Die Erfindung betrifft eine Beleuchtungseinrichtung für einen Beladungsträger, insbesondere einen Spülkorb, einer Geschirrspülmaschine.

Eine Geschirrspülmaschine mit einem Beladungsträger, der eine Beleuchtungseinrichtung aufweist, ist beispielsweise aus der EP 2 581 026 A2 bekannt.

Gemäß der EP 2 581 026 A2 ist am Beladungsträger ein Leuchtelement derart angeordnet, dass eine Zone oder mehrere Zonen des Beladungsträgers optisch sichtbar bzw. visualisiert werden. Um das Leuchtelement mit Energie zu versorgen, weist die Geschirrspülmaschine eine Energieversorgungseinrichtung auf, die entweder über eine vom Beladungsträger getragene Batterie verfügt oder die eine elektrisch leitende Verbindung zu einer außerhalb des Beladungsträgers angeordneten Energiequelle bereitstellt.

Für eine verwenderseitige Bedienung des Beladungsträgers ist dieser mit einem Griffabschnitt ausgerüstet. Nach der EP 2 581 026 A2 ist das Leuchtelement separat zu dem vom Beladungsträger bereitgestellten Griffabschnitt ausgebildet, so dass mittels des Leuchtelements ein Ausleuchten des Beladungsträgers zumindest zum Teil stattfinden kann, was eine verwenderseitige Be- und Entladung des Beladungsträgers insbesondere bei vergleichsweise dunklen Umgebungseinflüssen erleichtert.

Obgleich sich die vorbeschriebene Konstruktion im alltäglichen Praxiseinsatz bewährt hat, besteht Verbesserungsbedarf. Insbesondere ist es angestrebt und **Aufgabe** der Erfindung, eine im Aufbau vereinfachte Beleuchtungseinrichtung bereitzustellen, die es bei gleichzeitiger Sicherstellung eines funktionsgerechten Betriebs ermöglicht, konstruktiv eine einfache und damit preisgünstige Montage erzielen zu können.

Zur **Lösung** dieser Aufgabe wird mit der Erfindung vorgeschlagen eine Beleuchtungseinrichtung für einen Beladungsträger, insbesondere einen Spülkorb, einer Geschirrspülmaschine, mit einem plattenförmig ausgebildeten Blendenelement, das eine Vorderseite und eine Rückseite aufweist, mit einem schalenförmig ausgebildeten Gehäuse, das unter Zwischenordnung einer Dichtung rückseitig des Blendenelements am Blendenelement anliegt, und mit einem vom Gehäuse aufgenommenen Lichtleiter aus einem transparenten oder transluzenten Kunststoffmaterial, wobei das Blendenelement Durchbrüche aufweist, in die vom Lichtleiter bereitgestellte Vorsprünge formschlüssig eingreifen.

Die erfindungsgemäße Beleuchtungseinrichtung verfügt über ein Blendenelement, ein Gehäuse und einen Lichtleiter. Dabei weist das Blendenelement Durchbrüche auf, in die vom Lichtleiter bereitgestellte Vorsprünge formschlüssig eingreifen.

Im bestimmungsgemäßen Verwendungsfall erfolgt eine Lichteinleitung in den Lichtleiter, so dass verwenderseitig bei einer Frontansicht der Beleuchtungseinrichtung die die Durchbrüche des Blendenelements durchgreifenden Vorsprünge des Lichtleiters visuell sichtbar hervorgehoben sind. Die vorbeschriebene Konstruktion dient mithin in erster Linie nicht dazu, eine Ausleuchtung des Beladungsträgers zu ermöglichen, sondern eine visuelle Hervorhebung dadurch zu erreichen, dass das Blendenelement Durchbrüche aufweist, in die im bestimmungsgemäßen Betriebsfall lichtdurchflutete Vorsprünge eingreifen.

Das Blendenelement ist nach Art einer Platte ausgebildet und weist eine Vorderseite einerseits und eine Rückseite andererseits auf. Im bestimmungsgemäßen Verwendungsfall ist das Blendenelement verwenderseitig zugänglich an einem Beladungsträger angeordnet und dient dort als Griffelement bzw. Handhabe.

Die Beleuchtungseinrichtung verfügt des Weiteren über ein Gehäuse. Dies ist schalenförmig ausgebildet und nimmt im endmontierten Zustand den Lichtleiter und weitere Baukomponenten der Beleuchtungseinrichtung auf, wie zum Beispiel eine mit Lichtquellen bestückte Platine.

Im endmontierten Zustand sind die vom Gehäuse aufgenommenen Baukomponenten der Beleuchtungseinrichtung wasserdicht innerhalb des Gehäuses untergebracht, zu welchem Zweck eine Dichtung vorgesehen ist, unter deren Zwischenordnung das Gehäuse rückseitig des Blendenelements am Blendenelement angeordnet ist.

Dank ihres konstruktiven Aufbaus ist die erfindungsgemäße Beleuchtungseinrichtung vollständig vormontierbar. Sie kann als solche auswechselbar an einem Beladungsträger, beispielsweise einem Spülkorb, angeordnet werden, wobei sie dort als Korbgriff oder Handhabe dient. Insofern stellt die erfindungsgemäße Beleuchtungseinrichtung eine in einen Korbgriff integrierte Beleuchtungseinheit dar bzw. es ist eine Beleuchtungseinrichtung gegeben, die zugleich auch als verwenderseitige Handhabe zur Bedienung eines Beladungsträgers dient.

Die erfindungsgemäße Beleuchtungseinrichtung zeichnet sich ferner durch die vergleichsweise geringe Bauhöhe aus, was die Integration in ein korbseitiges Griffsystem zusätzlich vereinfacht.

Gemäß einem weiteren Merkmal der Erfindung ist vorgesehen, dass die Vorsprünge - auch Abschnitte genannt - mit der Vorderseite des Blendenelements bündig abschließen. Es ist so ein insgesamt visuell harmonischer Abschluss der Vorderseite des Blendenelements gegeben.

Gemäß einem weiteren Merkmal der Erfindung ist vorgesehen, dass die formschlüssige Aufnahme der lichtleiterseitigen Vorsprünge durch die blendenelementseitigen Durchsprünge wasserdicht ausgebildet ist. Es ist so sichergestellt, dass es nicht zu einem ungewollten Wassereintrag an der Gehäusedichtung vorbei dadurch kommen kann, dass ein Wassereintrag durch die Spalte zwischen den blendenseitigen Durchbrüchen einerseits und den in die Durchbrüche eingesetzten lichtleiterseitigen Vorsprünge andererseits erfolgt. Im Ergebnis ist der gesamte vom Gehäuse umgebene Volumenraum wasserdicht ausgebildet, so dass die davon aufgenommenen Baukomponenten der erfindungsgemäßen Beleuchtungseinrichtung vor Wasser geschützt sind.

Gemäß einem weiteren Merkmal der Erfindung ist vorgesehen, dass das Blendenelement und der Lichtleiter stoffschlüssig oder quasi stoffschlüssig miteinander verbunden sind.

Durch die stoffschlüssige oder quasi stoffschlüssige Ausgestaltung ist einerseits eine wasserdichte Verbindung zwischen Blendenelement und Lichtleiter realisiert und andererseits eine einstückige Baukomponente geschaffen, die eine vereinfachte Montage ermöglicht.

Eine stoffschlüssige Verbindung im Sinne der Erfindung ist beispielsweise dadurch gegeben, dass das Blendenelement und der Lichtleiter als Zwei-Komponenten-Kunststoffspritzgussteil ausgebildet sind. Gemäß dieser Ausführungsform wird zunächst das Blendenelement aus einem Kunststoffmaterial hergestellt. Alsdann wird der Lichtleiter ausgebildet, indem ein entsprechendes Kunststoffmaterial an das Blendenelement angespritzt wird. Infolgedessen entsteht ein einstückiges Bauteil, wobei der Lichtleiter und das Blendenelement stoffschlüssig ausgebildet sind.

Eine quasi stoffschlüssige Verbindung im Sinne der Erfindung ist beispielsweise eine Klebverbindung. Gemäß dieser Ausführungsform werden das Blendenelement und der Lichtleiter separat voneinander beispielsweise durch Spritzgießen hergestellt. Anschließend werden die beiden Baukomponenten miteinander durch kleben verbunden. Dabei sorgt die Klebverbindung für eine wasserdichte Anbindung des Lichtleiters an das Blendenelement. Im Ergebnis auch dieser Ausführungsform steht eine einstückig handhabbare Baukomponente, die aus dem Blendenelement einerseits und dem Lichtleiter andererseits gebildet ist.

Gemäß einem weiteren Merkmal der Erfindung ist vorgesehen, dass das Gehäuse eine Platine beherbergt, die eine mit dem Lichtleiter zusammenwirkende LED aufweist. Zusätzlich zur LED nimmt die Platine die für eine Ansteuerung notwendigen elektrischen und elektronischen Bauelemente auf. Dabei sind im Bereich der Platine kleine Erhöhungen angebracht, welche die Platinenposition halten und ein Durchbiegen verhindern. Im endmontierten Zustand wird die Platine von gehäuseseitig zur Verfügung gestellten Rastelementen gehalten.

Die Platine kann eine Mehrzahl von Lichtquellen, insbesondere in der Ausgestaltung als LEDs bereitstellen. Dabei ist die geometrische Ausgestaltung der Platine bzw. der davon getragenen LEDs so gewählt, dass im bestimmungsgemäßen Verwendungsfall ein von den LEDs ausgehender Lichteintrag in einen vom Gehäuse bereitgestellten Lichtverteilraum hinein stattfindet. Es findet also in Abkehr zum Stand der Technik kein direkter seitlicher Lichteintrag in den Lichtleiter statt, sondern es ist vielmehr eine Beschickung des Lichtleiters mit Licht über einen Lichtverteilraum vorgesehen, was in vorteilhafter Weise eine homogene Lichtverteilung innerhalb des Lichtleiters bewirkt.

Die zwischen Blendenelement und Gehäuse vorgesehene Dichtung ist gemäß einem weiteren Merkmal der Erfindung ein Formteil aus Silikon oder eine blendenelementseitig auf das Gehäuse aufgebrachte Klebraupe. Im Ergebnis liegt das Gehäuse wasserdicht am Blendenelement an, so dass die vom Gehäuse aufgenommenen Baukomponenten der erfindungsgemäßen Beleuchtungseinrichtung vor einem ungewollten Wassereintrag geschützt sind.

Zur Stromversorgung insbesondere der Platine kann gemäß einer ersten Ausführungsform eine externe Energiequelle vorgesehen sein. In diesem Fall sind zur Energieversorgung der Platine Kabel vorgesehen, die durch eine vom Gehäuse bereitgestellte Kabeldurchtrittsöffnung geführt sind. Diese Kabeldurchtrittsöffnung ist gemäß einem weiteren Merkmal der Erfindung wasserdicht ausgebildet. Zu diesem Zweck kann die zwischen Blendenelement und Gehäuse vorgesehene Dichtung ein entsprechendes Dichtteil aufweisen, das für eine wasserdichte Ausgestaltung der Kabeldurchtrittsöffnung Sorge trägt. Alternativ kann zur Energieversorgung auch eine vom Gehäuse bereitgestellte Batterie vorgesehen sein. Für den konstruktiven Aufbau der erfindungsgemäßen Beleuchtungseinrichtung spielt eine Energieversorgung der Platine indes keine Rolle, weshalb auch auf an sich bekannte Systeme und Einrichtungen zur Energieversorgung zurückgegriffen werden kann.

Gemäß einem weiteren Merkmal der Erfindung ist vorgesehen, dass der Lichtleiter eine Rastkontur zur auswechselbaren Anordnung des Gehäuses trägt. Diese Rastkontur ist vorzugsweise auf der dem Blendenelement abgewandten Rückseite des Lichtleiters ausgebildet.

Im endmontierten Zustand sind das Blendenelement und der Lichtleiter in vorbeschriebener Weise stoffschlüssig oder quasi stoffschlüssig miteinander verbunden, bilden also eine einstückige Baukomponente aus. Zur Anordnung des Gehäuses an dieser Baukomponente ist eine Rastkontur vorgesehen, die vom Lichtleiter bereitgestellt ist. Im endmontierten Zustand ist das Gehäuse mithin am Lichtleiter verrastet und liegt in dieser Stellung unter Zwischenordnung der schon vorbeschriebenen Dichtung wasserdicht an der Rückseite des Blendenelements an.

Gemäß einem weiteren Merkmal der Erfindung ist vorgesehen, dass das Blendenelement aus einem lichtundurchlässigen Kunststoffmaterial gebildet ist. Im Unterschied hierzu ist der Lichtleiter aus einem lichtdurchlässigen Material gebildet, das heißt einem transparenten und/oder transluzenten Kunststoffmaterial. Im Ergebnis dieser Ausgestaltung ergibt sich eine visuelle Unterscheidung zwischen dem Blendenelement einerseits und dem Lichtleiter andererseits. Dabei wird der Lichtleiter bei eingeschalteten LEDs lichtdurchflutet, wohingegen das Blendenelement aufgrund seiner lichtundurchlässigen Ausgestaltung keinerlei Licht leitet. Im bestimmungsgemäßen Verwendungsfall leuchten mithin die vom Lichtleiter bereitgestellten und die Durchbrüche des Blendenelementes durchragenden Vorsprünge für einen Verwender visuell gut erkennbar auf. In diesem Zusammenhang ist es bevorzugt, dass die Vorsprünge des Lichtleiters in ihrer geometrischen Ausgestaltung in Gänze ein Logo wiedergeben, das bei einer frontseitigen Betrachtung des Blendenelements durch einen Verwender gut wahrnehmbar ist.

Von besonderem Vorteil der erfindungsgemäßen Beleuchtungseinrichtung ist insbesondere, dass diese konstruktionsbedingt vollständig vormontiert und in dieser vormontierten Ausgestaltung angeliefert und anschließend am Korbgriff eines Beladungsträgers montiert werden kann. Dabei stellt das Blendenelement der Beleuchtungseinrichtung eine vom Verwender ergreifbare Handhabe zur Bedienung des Beladungsträgers bereit. Die erfindungsgemäße Beleuchtungseinrichtung ist mithin im endmontierten Zustand in den Korbgriff des Beladungsträgers integriert bzw. die Beleuchtungseinrichtung stellt mit dem Blendenelement eine integrale Handhabe zur Bedienung des Beladungsträgers bereit.

Der konstruktive Aufbau der Beleuchtungseinrichtung gestattet es zudem, Bestandsbeladungsträger in einfacher Weise nachrüsten zu können.

Gemäß einer bevorzugten Ausführungsform der Erfindung dient das Blendenelement im endmontierten Zustand als Griffblende, wobei das Blendenelement im 2K-Kunststoffspritzguss hergestellt ist. Dabei ist das Blendenelement aus einem Werkstoff gefertigt, der eine stoffschlüssige Verbindung zu einer weiteren Komponente eingehen kann. Diese weitere Komponente bildet den lichtdurchlässigen Lichtleiter aus, der für einen Verwender in Frontansicht des Beladungsträgers sichtbar beispielsweise ein Logo ausbildet. Das transparente Logo ist bis hin zur Vorderseite des Blendenelements flächenbündig ausgeführt, so dass eine homogene, glatte Außenfläche ausgebildet ist.

Gemäß einem weiteren Merkmal der Erfindung ist vorgesehen, dass ein vom Lichtleiter bereitgestellter Vorsprung eine Lichtaustrittsfläche und eine der Lichtaustrittsfläche gegenüberliegende Lichteintrittsfläche aufweist, wobei die Vielzahl von Lichtaustrittsflächen eine gemeinsame Austrittsfläche und die Vielzahl von Lichteintrittsflächen eine gemeinsame Eintrittsfläche bilden.

Der in einen Durchbruch des Blendenelements eingreifende Vorsprung des Lichtleiters verfügt über eine Lichteintrittsfläche einerseits und eine Lichtaustrittsfläche andererseits, wobei die Lichteintrittsfläche der Lichtaustrittsfläche gegenüberliegend ausgebildet ist.

Dieser erfindungsgemäße Aufbau der Beleuchtungseinrichtung ermöglicht in vorteilhafter Weise eine rückseitige Ausleuchtung des Lichtleiters, was zu einer homogenen Lichtverteilung innerhalb des Lichtleiters führt und ungewollte Streifenbildungen und/oder Verschattungen vermeiden hilft. Dies führt im Ergebnis zu einer gleichmäßigen Ausleuchtung des einen Durchbruch des Blendenelements durchgreifenden Vorsprungs des Lichtleiters, was zu einem verwenderseitig wahrnehmbaren, visuell insgesamt harmonischen Gesamteindruck führt.

In Abkehr zum Stand der Technik ist mit der erfindungsgemäßen Konstruktion nicht eine stirnseitige Beaufschlagung des Lichtleiters mit Licht vorgesehen. Vielmehr strahlt das von einer Lichtquelle abgegebene Licht in einen Lichtverteilraum ein, von wo aus es dann in den Lichtleiter rückwärtig eintritt. Der vom Lichtleiter bereitgestellte Vorsprung verfügt zur Lichtleitung über eine Lichteintrittsfläche einerseits und über eine Lichtaustrittsfläche andererseits. Dabei gelangt im bestimmungsgemäßen Verwendungsfall das Licht über die Lichteintrittsfläche in den Vorsprung des Lichtleiters und verlässt diesen wieder über die Lichtaustrittsfläche. Dabei führt die rückseitige Beaufschlagung des Lichtleiters mit Licht in schon vorbeschriebener Weise zu einer homogenen Lichtverteilung innerhalb des Lichtleiters, so dass auch bei einer Mehrzahl von entsprechenden Lichtleitervorsprüngen eine Beschickung dieser Vorsprünge in gleichförmiger und homogener Weise erfolgt, so dass insgesamt eine vergleichmäßigte Lichtverteilung erreicht ist.

Gemäß einem weiteren Merkmal der Erfindung ist vorgesehen, dass der Lichtleiter eine Vielzahl von Vorsprüngen mit jeweils einer Lichteintrittsfläche und einer Lichtaustrittsfläche aufweist, wobei die Vielzahl von Lichtaustrittsflächen eine gemeinsame Austrittsfläche und die Vielzahl von Lichteintrittsflächen eine gemeinsame Eintrittsfläche bilden.

Gemäß dieser bevorzugten Ausführungsform werden vom Lichtleiter eine Vielzahl von Einzelvorsprüngen bereitgestellt. Dabei durchgreift ein jeder Vorsprung einen jeweiligen Durchbruch des Blendenelements. Da das Blendenelement aus einem lichtundurchlässigen Kunststoffmaterial gebildet ist, ergibt sich für einen Verwender in Frontansicht der Beleuchtungseinrichtung eine abwechselnde Anordnung von lichtundurchlässigen Bereichen einerseits und lichtdurchlässigen Bereichen andererseits. Dabei sind die lichtdurchlässigen Bereiche durch die Vorsprünge des Lichtleiters bereitgestellt, wobei die schon vorbeschriebene Konstruktion des Lichtverteilraums sicherstellt, dass eine gleichmäßige Beschickung der einzelnen Vorsprünge des Lichtleiters mit Licht erfolgt. In der Konsequenz erfolgt eine homogenisierte Lichtverteilung auf sämtliche Vorsprünge des Lichtleiters, so dass diese im bestimmungsgemäßen Verwendungsfall gleich verteilt aufleuchten.

Gemäß einem weiteren Merkmal der Erfindung ist vorgesehen, dass der Lichtverteilraum der Eintrittsfläche des Lichtleiters gegenüberliegend durch einen Reflektor begrenzt ist.

Der Lichtverteilraum wird mithin einerseits durch den Lichtleiter und andererseits durch den Reflektor begrenzt, wobei dem Lichtverteilraum lichtleiterseitig die Eintrittsfläche und reflektorseitig eine Reflektorfläche zugewandt ist. Im bestimmungsgemäßen Verwendungsfall gelangt von einer Lichtquelle abgehendes Licht in den Lichtverteilraum, wobei dieses Licht rückseitig auf den Lichtleiter trifft, was insgesamt zu einer gleichmäßigen und homogenen Beaufschlagung des Lichtleiters mit Licht führt. Dabei kann unterschieden werden, ob das von der Lichtquelle abgegebene Licht nach einem Passieren des Lichtverteilraum entweder direkt rückseitig auf den Lichtleiter auftritt oder ob dieses zunächst am Reflektor reflektiert und alsdann in Richtung auf die Rückseite des Lichtleiters überführt wird. In jedem Fall erfolgt eine homogene Beaufschlagung der Rückseite des Lichtleiters mit Licht.

Gemäß einem weiteren Merkmal der Erfindung ist vorgesehen, dass die Eintrittsfläche des Lichtleiters und/oder eine vom Reflektor bereitgestellte Reflektorfläche mit Bezug auf die mit dem Lichtverteilraum zusammenwirkende Lichtquelle konkav ausgebildet sind / ausgebildet ist.

Diese Ausgestaltung unterstützt eine homogene Lichtverteilung innerhalb des Lichtleiters, weil eine gleichmäßige Beschickung der rückseitigen Oberfläche des Lichtleiters über die gesamte Längserstreckung des Lichtleiters erfolgt. Es sind insbesondere keine Bereiche des Lichtleiters vorgesehen, die im Vergleich zu anderen Bereichen mit mehr oder weniger Licht versorgt werden. Es findet vielmehr eine vergleichmäßigte Lichtverteilung statt, was die homogene Lichteinleitung und/oder -verteilung innerhalb des Lichtleiters zusätzlich begünstigt.

Gemäß einem weiteren Merkmal der Erfindung kann in diesem Zusammenhang vorgesehen sein, dass eine Mehrzahl von mit dem Lichtverteilraum zusammenwirkende Lichtquellen gegeben ist, wobei die Lichteintrittsfläche des Lichtleiters und/oder die Reflektorfläche des Reflektors Flächenbereiche aufweisen, die jeweils mit Bezug auf eine der Lichtquellen konkav ausgebildet sind.

Es können mit Bezug auf einzelne Lichtquellen insbesondere Segmente vom Lichtleiter und/oder vom Reflektor bereitgestellt sein, die unter unterschiedlichen Winkeln stehen. Der Vorteil dabei ist, dass so gestreut werden kann, wieviel Licht über die Länge des Lichtleiters eingefangen wird. Dadurch wird die winkelabhängige Intensitätsverteilung des abgestrahlten Lichts der Lichtquelle kompensiert.

Gemäß einem weiteren Merkmal der Erfindung ist vorgesehen, dass die Oberflächenstruktur der Eintrittsfläche des Lichtleiters eine Frensel-Struktur ist.

Gemäß dieser besonders bevorzugten Ausführungsform ist eine Oberflächenstruktur vorgesehen, die übereinander abwechselnde geradlinig verlaufende Flanken einerseits und gekrümmte Flanken andererseits verfügt. Eine solche Oberflächenstruktur sorgt dafür, dass von einer Lichtquelle ausgehende Lichtstrahlen gebrochen und in gestreutes Licht aufgespalten werden. Dabei sorgt das gestreute Licht für eine homogene Lichtverteilung innerhalb des Lichtleiters.

Gemäß einem weiteren Merkmal der Erfindung ist vorgesehen, dass die Oberfläche der Eintrittsfläche des Lichtleiters und/oder die Oberfläche der Reflektorfläche des Reflektors eine definierte Rauigkeit aufweist.

Auch durch diese Maßnahme kann eine zusätzliche Lichtstreuung des in den Lichtleiter einfallenden Lichts erreicht werden, was zusätzlich eine homogene Lichtverteilung innerhalb des Lichtleiters begünstigt.

Gemäß einem weiteren Merkmal der Erfindung ist vorgesehen, dass die Lichtquelle stirnseitig des Lichtverteilraums angeordnet ist. Insbesondere ungewollte Verschattungseffekte können so vermieden werden, weil das Licht von der Seite aus in den Lichtverteilraum hineinfällt und durch die vorstehend schon vorbeschriebenen Maßnahmen sichergestellt ist, dass in den Lichtleiter einfallendes Licht homogen verteilt ist.

Gemäß einem weiteren Aspekt der Erfindung wird ein Beladungsträger, insbesondere ein Spülkorb, für eine Geschirrspülmaschine vorgeschlagen, welcher eine Beleuchtungseinrichtung gemäß einem der vorstehend beschriebenen Ausführungsformen aufweist.

Weitere Merkmale und Vorteile der Erfindung ergeben sich aus der nachfolgenden Beschreibung anhand der Figuren. Dabei zeigen
- Fig. 1: in schematisch perspektivischer Ansicht einen erfindungsgemäß ausgebildeten Beladungsträger einer Geschirrspülmaschine;
- Fig. 2: in schematischer Explosionsdarstellung eine erfindungsgemäße Beleuchtungseinrichtung;
- Fig. 3: in schematisch perspektivischer Ansicht das Gehäuse der erfindungsgemäßen Beleuchtungseinrichtung;
- Fig. 4: in schematischer Perspektivansicht eine in das Gehäuse der Beleuchtungseinrichtung eingesetzte Platine;
- Fig. 5: in schematischer Draufsicht von oben die Platine nach Fig. 4 in Alleinstellung;
- Fig. 6: in schematisch perspektivischer Ansicht das Gehäuse der erfindungsgemäßen Beleuchtungseinrichtung samt Lichtleiter;
- Fig. 7: in schematisch perspektivischer Darstellung die Dichtung der erfindungsgemäßen Beleuchtungseinrichtung in Alleinstellung;
- Fig. 8: in schematischer Perspektivansicht das Blendenelement der erfindungsgemäßen Beleuchtungseinrichtung;
- Fig. 9: in schematisch perspektivischer Ansicht von hinten das Blendenelement nach Fig. 8 samt daran angeordnetem Lichtleiter;
- Fig. 10: in schematisch perspektivischer Ansicht von hinten das Blendenelement nach Fig. 8 mit montiertem Gehäuse;
- Fig. 11: in schematisch geschnittener Seitenansicht die erfindungsgemäße Beleuchtungseinrichtung;
- Fig. 12: in schematisch geschnittener Seitenansicht der Lichtleiter der erfindungsgemäßen Beleuchtungseinrichtung;
- Fig. 13: in schematisch geschnittener Seitenansicht den Lichtleiter und den Reflektor der erfindungsgemäßen Beleuchtungseinrichtung;
- Fig. 14: in schematisch geschnittener Seitenansicht ausschnittsweise die erfindungsgemäße Beleuchtungseinrichtung;
- Fig. 15: in schematischer Darstellung den Ausschnitt XV nach Fig. 14 und
- Fig. 16: in schematisch geschnittener Seitenansicht ausschnittsweise die erfindungsgemäße Beleuchtungseinrichtung.

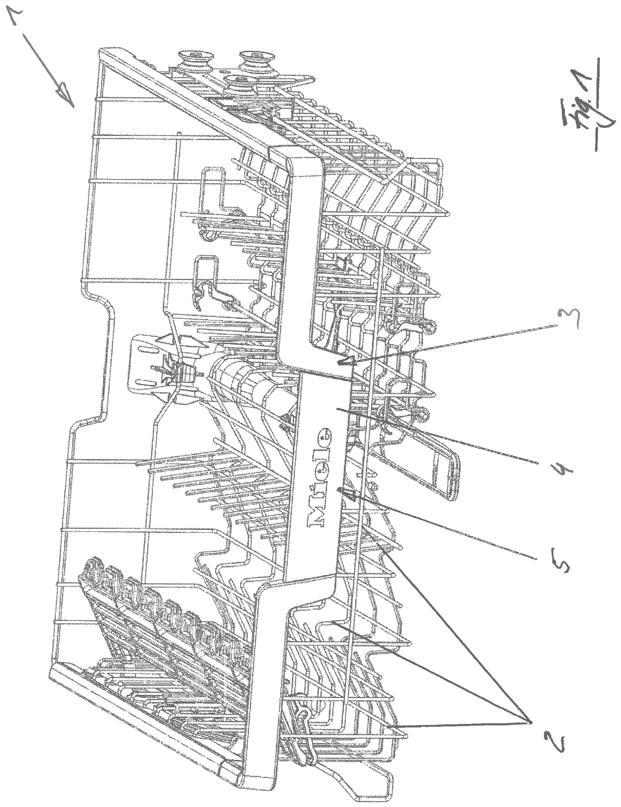

Fig. 1 lässt in schematisch perspektivischer Darstellung in der Ausgestaltung eines Spülkorbs 1 einen Beladungsträger einer ansonsten in den Figuren nicht näher dargestellten Geschirrspülmaschine erkennen. Im bestimmungsgemäßen Verwendungsfall ist der Spülkorb 1 verwenderseitig aus einem von der Geschirrspülmaschine bereitgestellten Spülraum herausverfahrbar bzw. in diesen hineinverfahrbar ausgebildet.

Der Spülkorb 1 verfügt im gezeigten Ausführungsbeispiel über ein Geflecht aus Drahtschlaufen und/oder -abschnitten 2, wobei es sich um kunststoffummantelte Drahtschlaufen bzw. -abschnitte 2 handelt. Um ein verwenderseitiges Ergreifen des Spülkorbs 1 zu erleichtern, ist der Spülkorb 1 mit einem Griffabschnitt 3 ausgebildet. Dieser Griffabschnitt 3 verfügt in einem mittleren Bereich über einen Korbgriff 4, der mit einer erfindungsgemäß ausgestalteten Beleuchtungseinrichtung 5 ausgerüstet ist.

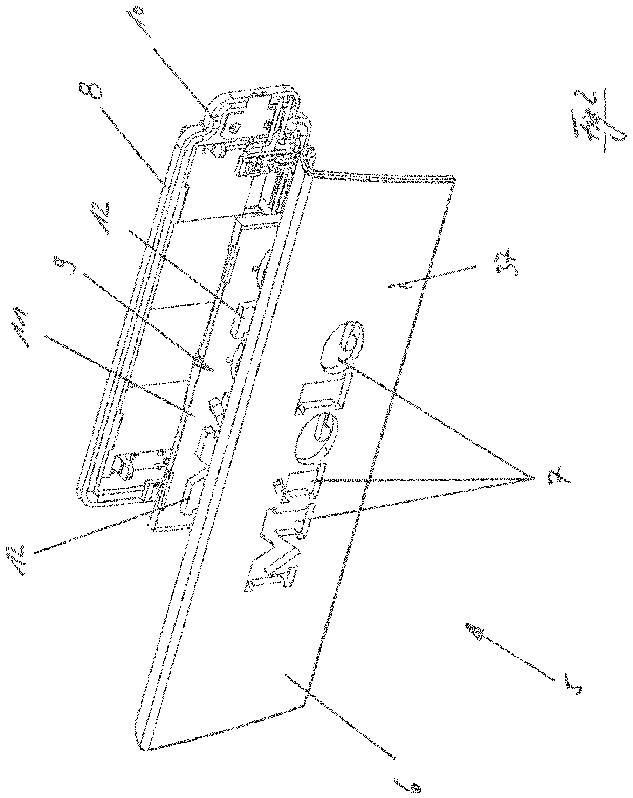

Fig. 2 lässt die erfindungsgemäße Beleuchtungseinrichtung 5 schematisch in einer Explosionsdarstellung erkennen. Wie sich aus dieser Darstellung ergibt, verfügt die Beleuchtungseinrichtung 5 über ein Blendenelement 6, auch Trägerelement genannt. Dieses ist plattenförmig ausgebildet und weist eine Frontseite 37 sowie eine Rückseite 38 auf, wie insbesondere eine Zusammenschau der Figuren 2 und 9 bzw. 10 erkennen lässt.

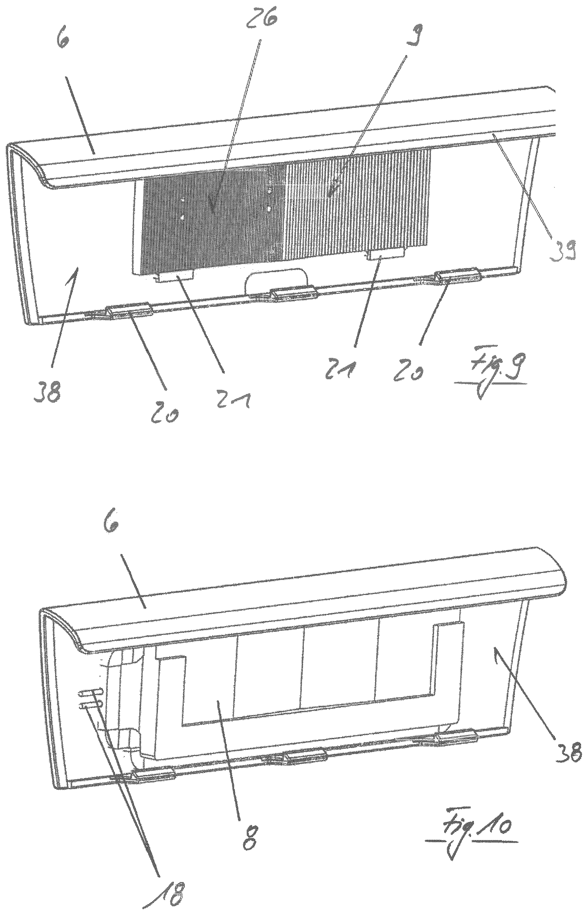

Die Beleuchtungseinrichtung 5 verfügt des Weiteren über ein schalenförmig ausgebildetes Gehäuse 8, das unter Zwischenordnung einer Dichtung 10 rückseitig des Blenden- bzw. Trägerelements 6 am Blenden- bzw. Trägerelement 6 anliegt. Dieser Sachzusammenhang ergibt sich insbesondere aus einer Zusammenschau der Figuren 2 und 10.

Die Beleuchtungseinrichtung 5 verfügt des Weiteren über einen im endmontierten Zustand vom Gehäuse 8 aufgenommenen Lichtleiter 9. Dieser Lichtleiter 9 ist aus einem transparenten und/oder transluzenten Kunststoffmaterial gebildet.

Das Blenden- bzw. Trägerelement 6 verfügt auf seiner Rückseite 38 über Rasthaken 20, wie Fig. 9 erkennen lässt. Ferner ist eine Haltekante 39 vorgesehen, die in Höhenrichtung den Rasthaken 20 gegenüberliegend ausgebildet ist. Die Haltekante 39 ermöglicht im Zusammenspiel mit den Rasthaken 20 eine dauerhaft sichere, gleichwohl aber lösbare Anordnung des Blenden- bzw. Trägerelements 6 am Spülkorb 1, wie in Fig. 1 dargestellt. Im bestimmungsgemäßen Verwendungsfall dient das Blenden- bzw. Trägerelement 6 mithin als verwenderseitig ergreifbare Handhabe des Korbgriffs 4, was es einem Verwender gestattet, den Spülkorb 1 in schon vorbeschriebener Weise aus einem von der Geschirrspülmaschine bereitgestellten Spülraum herauszuverfahren bzw. ihn in diesen hineinzuverbringen.

Auf der Rückseite 38 des Blenden- bzw. Trägerelements 6 sind der Lichtleiter 9 und das den Lichtleiter 9 umgebende Gehäuse 8 angeordnet, womit sich insgesamt eine Integration der Beleuchtungseinrichtung 5 in den Korbgriff 4 ergibt bzw. das von der Beleuchtungseinrichtung 5 bereitgestellte Blenden- bzw. Trägerelement 6 als verwenderseitig nutzbare Handhabe für eine Bedienung des Spülkorbs 1 dient.

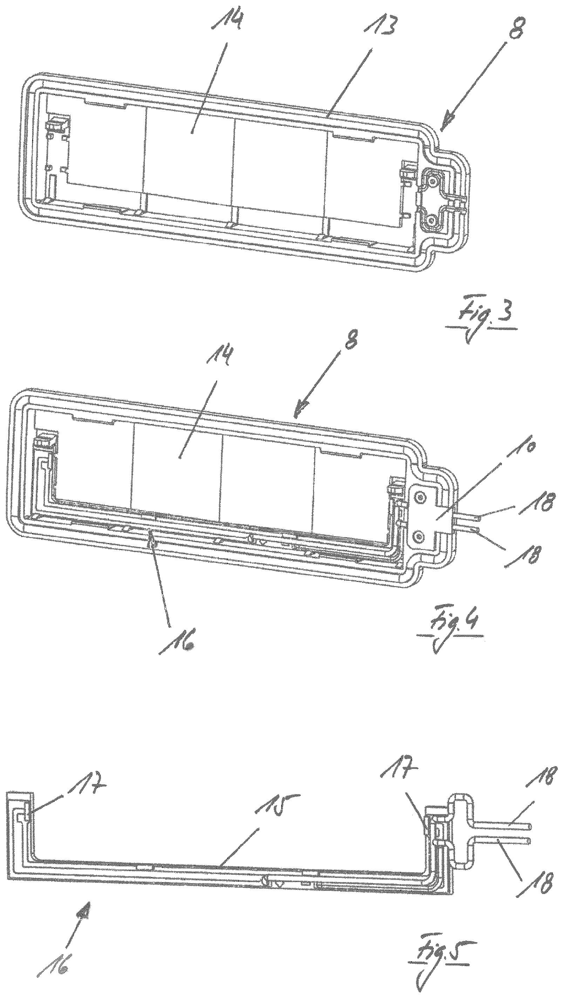

Der Aufbau der erfindungsgemäßen Beleuchtungseinrichtung 5 ergibt sich insbesondere aus einer Zusammenschau der weiteren Figuren 3 bis 10.

Das Blenden- bzw. Trägerelement 6 verfügt über Durchbrüche 7. Im dargestellten Ausführungsbeispiel stellen die Durchbrüche 7 Buchstaben dar, die in ihrer Gesamtheit den Schriftzug "MIELE" ergeben. Gebildet ist das Blenden- bzw. Trägerelement 6 aus einem lichtundurchlässigen Kunststoffmaterial.

Der Lichtleiter 9 der erfindungsgemäßen Beleuchtungseinrichtung 5 besteht im Unterschied zum Blenden- bzw. Trägerelement 6 aus einem lichtdurchlässigen Material. Er ist aus einem Grundkörper 11 und Vorsprüngen 12 bzw. Abschnitten 12 gebildet, wobei die Vorsprünge 12 bzw. Abschnitte 12 mit dem Grundkörper 11 einstückig ausgebildet sind.

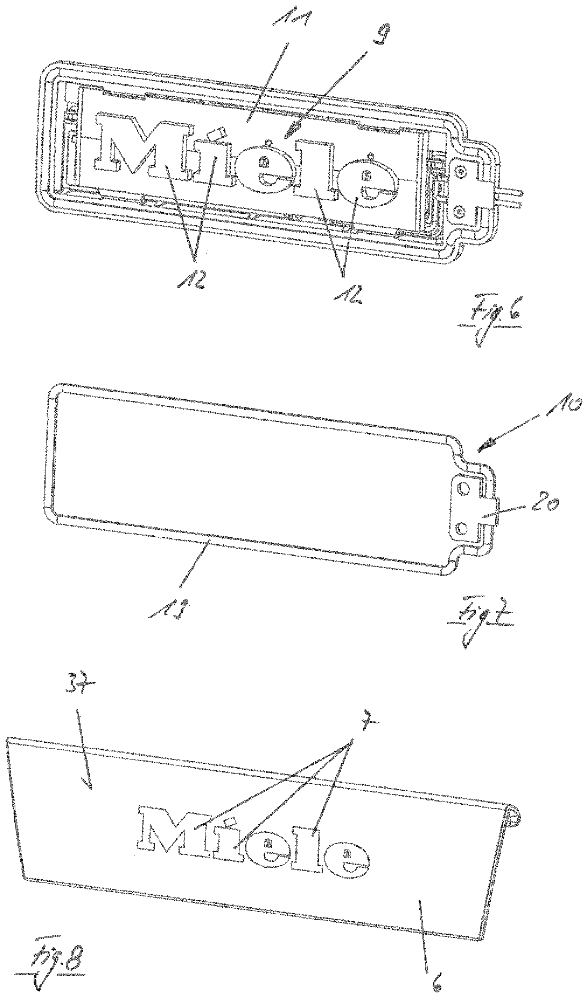

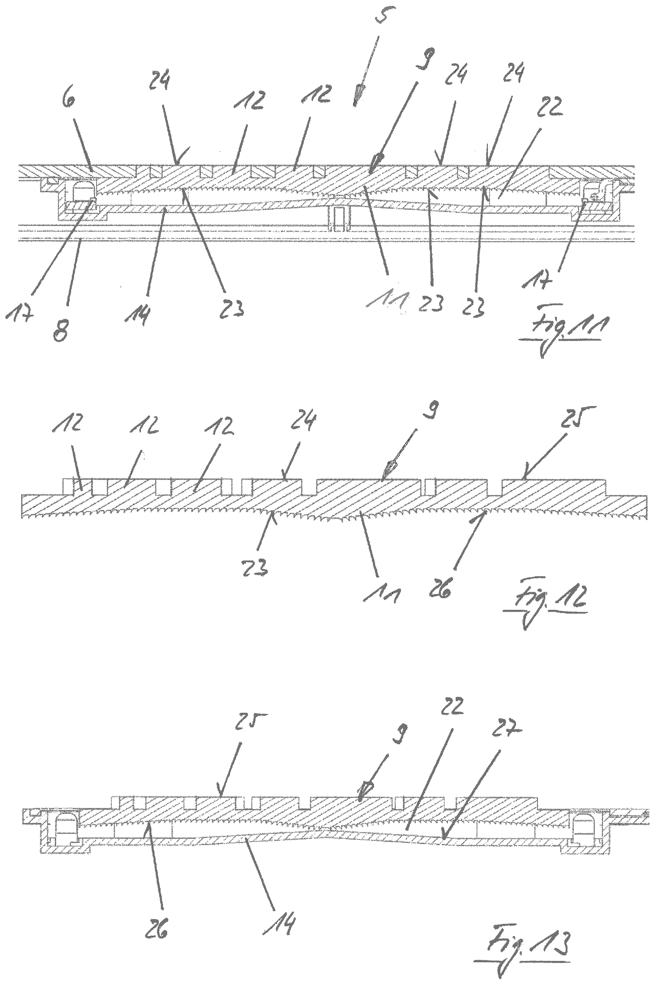

Wie sich insbesondere aus der Darstellung nach Fig. 6 ergibt, sind die Vorsprünge 12 bzw. Abschnitte 12 des Lichtleiters 9 zu den Durchbrüchen 7 des Blenden- bzw. Trägerelements 6 korrespondierend ausgebildet. Die Vorsprünge 12 bzw. Abschnitte 12 bilden mithin die als Buchstaben ausgebildeten Durchbrüche 7 nach und lassen in ihrer Gesamtheit ebenfalls den Schriftzug "MIELE" erkennen. Im endmontierten Zustand, wie er sich beispielsweise aus der Schnittdarstellung nach Fig. 12 ergibt, greifen die vom Lichtleiter 9 bereitgestellten Vorsprünge 12 bzw. Abschnitte 12 in die zugehörigen Durchbrüche 7 den Blenden- bzw. Trägerelements 6 formschlüssig ein. Dabei schließen die Vorsprüche 12 bzw. Abschnitte 12 des Lichtleiters 9 vorzugsweise mit der Frontseite 37 des Blenden- bzw. Trägerelements 6 bündig ab.

Die Vorsprünge 12 bzw. Abschnitte 12 des Lichtleiters 9 sind in die blendenelementseitigen Durchbrüche 7 wasserdicht eingesetzt. Diese wasserdichte Ausgestaltung ist bevorzugterweise dadurch erreicht, dass das Blenden- bzw. Trägerelement 6 und der Lichtleiter 9 stoffschlüssig oder quasi stoffschlüssig miteinander verbunden sind. "Stoffschlüssig" meint in diesem Zusammenhang insbesondere eine Ausgestaltung des Blendenelements 6 einerseits und des Lichtleiters 9 andererseits als Zwei-Komponenten-Kunststoffspritzgussteil. Das Blenden- bzw. Trägerelement 6 ist mithin aus einem Kunststoff gefertigt, der eine stoffschlüssige Verbindung zu einer weiteren Kunststoffkomponente, nämlich dem Lichtleiter 9 eingehen kann. Dabei ist der Lichtleiter 9 aus einem transparenten und/oder transluzenten Kunststoffmaterial gebildet, der verwenderseitig sichtbar Vorsprünge 12 bzw. Abschnitte 12 bereitstellt, die im gezeigten Ausführungsbeispiel den Schriftzug "MIELE" ergeben. Dabei schließen die Vorsprünge 12 bzw. Abschnitte 12 mit der Frontseite 37 des Blenden- bzw. Trägerelements 6 bündig ab, so dass eine insgesamt homogene und glatte Außenoberfläche gegeben ist.

Als eine "quasi stoffschlüssige" Verbindung kann beispielsweise eine Klebverbindung vorgesehen sein. In diesem Fall sind das Blenden- bzw. Trägerelement 6 einerseits und der Lichtleiter 9 andererseits jeweils als separate Bauteile ausgebildet, die anschließend unter Ausbildung einer quasi stoffschlüssigen Verbindung miteinander verklebt werden.

Die Beleuchtungseinrichtung 5 verfügt des Weiteren über ein Gehäuse 8. Dieses Gehäuse 8 ist nach Art einer einseitig offenen Schale ausgebildet, wie sich insbesondere aus einer Zusammenschau der Figuren 3 und 4 ergibt. Dieses Gehäuse 8 nimmt im bestimmungsgemäßen Verwendungsfall eine Platine 15 auf, die Lichtquellen insbesondere in der Ausgestaltung als LEDs 17 trägt sowie über weitere elektronische oder elektrische verfügt. Für einen elektrischen Anschluss der Platine 15 an eine Stromversorgung sind entsprechend ausgebildete Anschlussleitungen 18 vorgesehen. Die Platine 15, die davon getragenen LEDs 17 sowie weitere von der Platine 17 bereitgestellte und in den Figuren nicht näher dargestellte Baukomponenten bilden zusammen die Beleuchtungseinheit 16.

Wie sich insbesondere aus der Darstellung nach Fig. 4 ergibt, ist die Beleuchtungseinheit 16 im endmontierten Zustand vom Gehäuse 8 aufgenommen.

Das Gehäuse 8 verfügt über eine umlaufende Rille 13, wie sich aus Fig. 3 ergibt. In diese Rille 13 ist im endmontierten Zustand die Dichtung 10 eingesetzt, womit das Gehäuse 8 im endmontierten Zustand unter Zwischenordnung der Dichtung 10 an der Rückseite 38 des Blenden- bzw. Trägerelements 6 anliegt.

Für eine wasserdichte Abführung der Anschlussleitungen 18 verfügt die Dichtung 10 nicht nur über einen Dichtsteg 19, sondern ferner auch über ein Dichtteil 20, wie sich dies insbesondere aus der Darstellung nach Fig. 7 ergibt. Durch dieses Dichtteil 20 sind im endmontierten Zustand die Anschlussleitungen 18 herausgeführt, wie dies Fig. 4 zeigt.

Fig. 6 lässt schließlich noch erkennen, wie der Lichtleiter 9 im endmontierten Zustand innerhalb des Gehäuses 8 zu liegen kommt. Wie sich aus dieser Darstellung ergibt, wird das Gehäuse 8 im endmontierten Zustand vom Lichtleiter 9 getragen, zu welchem Zweck der Lichtleiter 9 über einstückig daran angeformte Rasthaken 21 verfügt, wie sich insbesondere aus der Darstellung nach Fig. 9 ergibt.

Fig. 10 zeigt schließlich noch das Blenden- bzw. Trägerelement 6 in einer rückwärtigen Ansicht, und zwar mit montiertem Gehäuse 28.

Zur Fertigung bzw. Ausgestaltung der erfindungsgemäßen Beleuchtungseinrichtung 5 ist zunächst das Blenden- bzw. Trägerelement 6 mit seinen Durchbrüchen 7 auszubilden. Alsdann wird im Spritzgussverfahren der Lichtleiter 9 an das Blenden- bzw. Trägerelement 6 angespritzt, wodurch eine stoffschlüssige und damit wasserdichte Verbindung zwischen Lichtleiter 9 und Blenden- bzw. Trägerelement 6 ausgebildet wird. Dabei erfolgt ein Anspritzen des Lichtleiters 9 an das Blenden- bzw. Trägerelement 6 derart, dass die vom Lichtleiter 9 bereitgestellten Vorsprünge 12 bzw. Abschnitte 12 die von dem Blenden- bzw. Trägerelement 6 bereitgestellten Durchbrüche 7 durchgreifen, und zwar derart, dass sie vorderseitig mit der Vorderseite 37 des Blenden- bzw. Trägerelements 6 bündig abschließen.

Das mit der Beleuchtungseinheit 16 und der Dichtung 10 bestückte Gehäuse 8 ist alsdann rückseitig des Blenden- bzw. Trägerelements 6 anzuordnen, und zwar am Lichtleiter 9, zu welchem Zweck dieser über entsprechende Rasteinrichtungen verfügt. Dabei liegt im endmontierten Zustand das Gehäuse 8 unter Zwischenordnung der Dichtung 10 wasserdicht an der Rückseite 38 des Blenden- bzw. Trägerelements 6 an.

Die erfindungsgemäße Beleuchtungseinrichtung 5 kann in vorbeschriebener Weise vormontiert werden. Dies gestattet eine einfache Anordnung der Beleuchtungseinrichtung 5 am Spülkorb 1, indem nämlich die Beleuchtungseinrichtung 5 mittels ihrer Haltekante 39 und der Rasthaken 20 an den Drahtschlaufen und/oder -abschnitten 2 des Spülkorbs 1 angeordnet wird. Von besonderem Vorteil der erfindungsgemäßen Ausgestaltung ist mithin, dass die Beleuchtungseinrichtung 5 vollständig vormontiert angeliefert und anschließend in den Griffabschnitt 3 des Spülkorbs 1 integriert werden kann. Dabei zeichnet sich die erfindungsgemäße Beleuchtungseinrichtung 5 durch ihre sehr geringe Bauhöhe aus, was deren Integration in den Griffabschnitt 3 deutlich vereinfacht. Dabei ist insbesondere aufgrund der stoffschlüssigen bzw. quasi stoffschlüssigen Verbindung ein wasserdichter Abschluss zwischen dem Blenden- bzw. Trägerelement 6 einerseits und dem Lichtleiter 9 andererseits gegeben, so dass in Kombination mit der zwischen dem Blenden- bzw. Trägerelement 6 und dem Gehäuse 8 angeordneten Dichtung 10 ein in seiner Dichtwirkung reproduzierbares System mit gleichbleibender Qualität realisiert ist. Die Möglichkeit der vollständigen Vormontage der erfindungsgemäßen Beleuchtungseinrichtung 5 gestattet es auch, Bestandsspülkörbe nachrüsten zu können.

Von erfindungsgemäßer Bedeutung ist mithin allein der konstruktive Aufbau der erfindungsgemäßen Beleuchtungseinrichtung 5. Hinsichtlich einer Energieversorgung der Lichtquellen 17, insbesondere der LEDs 17 mit Strom können unterschiedliche Varianten vorgesehen sein. Der konstruktive Aufbau der erfindungsgemäßen Beleuchtungseinrichtung 5 ändert sich durch die Wahl der Stromversorgung jedenfalls nicht. Mögliche Varianten können in diesem Zusammenhang batteriegestützte Systeme sein, wobei es in diesem Fall bevorzugt ist, innerhalb des Gehäuses 8 eine wiederaufladbare Batterie anzuordnen. Alternativ ist eine kabelgestützte Stromversorgung, zu welchem Zweck im gezeigten Ausführungsbeispiel die Anschlussleitungen 18 vorgesehen sind. Dabei können etwaige stromführende Kabel vom Spülkorb 1 verdeckt verlegt sein, beispielsweise durch entsprechend am Drahtgeflecht des Spülkorbs 1 angeordnete leistenförmige Abdeckungen und/oder dergleichen. Es kann auch eine Stromerzeugungseinrichtung nach Art eines Dynamos vorgesehen sein, die verwenderseitig aufgebrachte Bewegungsenergie für ein Verschieben des Spülkorbs 1 zur Stromerzeugung nutzt.

Im Ergebnis der erfindungsgemäßen Konstruktion steht jedenfalls eine Beleuchtungseinrichtung 5, deren Blenden- bzw. Trägerelement 6 Durchbrüche 7 aufweist, in die vom Lichtleiter 9 bereitgestellte Vorsprünge 12 bzw. Abschnitte 12 formschlüssig eingreifen. Diese Vorsprünge 12 bzw. Abschnitte 12 sind frontseitig des Blenden- bzw. Trägerelements 6 für einen Verwender visuell zugänglich, so dass bei einer Hinterleuchtung des Lichtleiters 9 durch die Lichtquellen 17 eine entsprechende Ausleuchtung der Vorsprünge 12 bzw. Abschnitte 12 visuell wahrnehmbar ist. Dabei sind die einzelnen Vorsprünge 12 bzw. Abschnitte 12 von dem lichtdurchlässigen Kunststoffmaterial des Blenden- bzw. Trägerelements 6 visuell voneinander getrennt, was zu einer besonderen Kontrastierung der Vorsprünge 12 bzw. Abschnitte 12 führt.

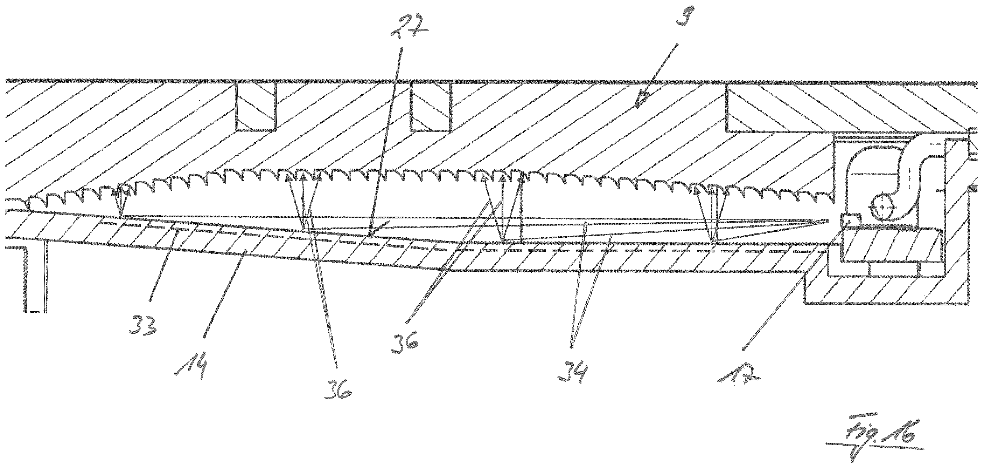

Wie sich aus einer weiteren Zusammenschau der Figuren 11 und 16 ergibt, ermöglicht der erfindungsgemäße Aufbau der Beleuchtungseinrichtung 5 eine rückseitige Ausleuchtung des Lichtleiters 9, was zu einer homogenen Lichtverteilung innerhalb des Lichtleiters 9 führt und ungewollte Streifenbildungen und/oder Verschattungen vermeiden hilft. Dies führt im Ergebnis zu einer gleichmäßigen Ausleuchtung sämtlicher Vorsprünge 12 bzw. Abschnitte 12 des Lichtleiters 9, was zu einem verwenderseitig wahrnehmbaren, visuell insgesamt harmonischen Gesamteindruck führt.

Wie insbesondere die Figuren 11 und 12 erkennen lassen, stellen die Vorsprünge 12 bzw. Abschnitte 12 des Lichtleiters 9 jeweils eine Lichteintrittsfläche 23 und eine Lichtaustrittsfläche 24 bereit. Dabei sind die Lichteintrittsfläche 23 und die Lichtaustrittsfläche 24 eines jeweiligen Vorsprungs 12 bzw. eines Abschnitts 12 einander gegenüberliegend ausgebildet.

Wie dies insbesondere die Darstellung nach Fig. 12 erkennen lässt, bildet die Vielzahl von Lichtaustrittsflächen 24 eine gemeinsame Austrittsfläche 25 und die Vielzahl von Lichteintrittsflächen 23 bildet eine gemeinsame Eintrittsfläche 26.

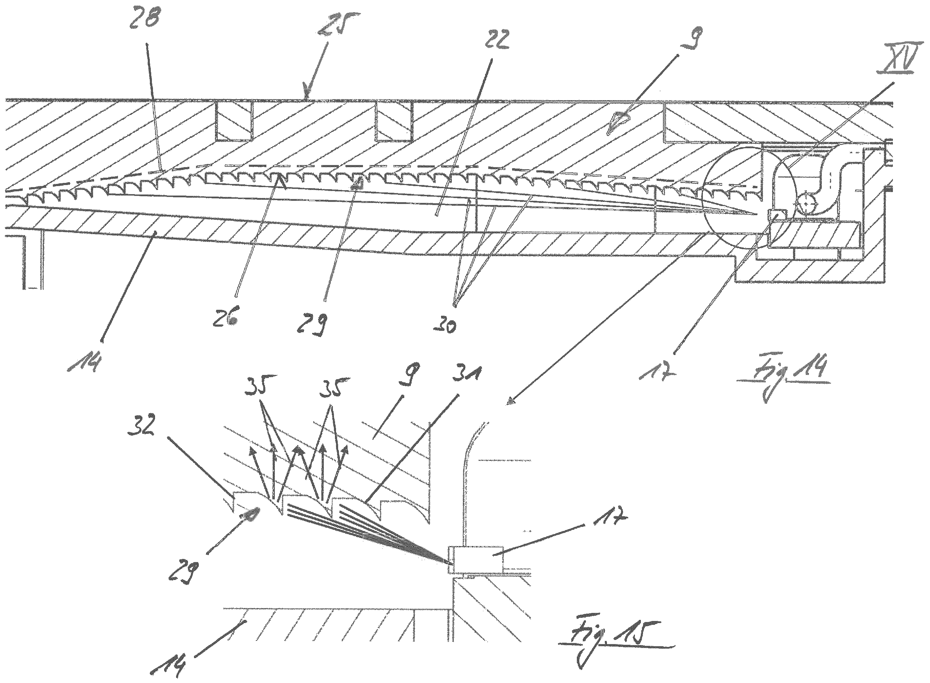

Die Figuren 11 und 13 einerseits bzw. die Figuren 14 und 16 andererseits lassen erkennen, dass die Eintrittsfläche 26 an einen mit den LEDs 17 zusammenwirkenden Lichtverteilraum 22 angrenzt. Dieser Lichtverteilraum 22 ist der Eintrittsfläche 26 gegenüberliegend durch einen Reflektor 14 begrenzt, der lichtleiterseitig eine Reflektorfläche 27 bereitstellt. Der Lichtverteilraum 22 wird mithin einerseits durch den Lichtleiter 9 und andererseits durch den Reflektor 14 begrenzt, wobei dem Lichtverteilraum 22 lichtleiterseitig die Eintrittsfläche 26 und reflektorseitig die Reflektorfläche 27 zugewandt ist. Im bestimmungsgemäßen Verwendungsfall gelangt von einer LED 17 abgegebenes Licht in den Verteilraum 22, wobei dieses Licht rückseitig auf den Lichtleiter 9 trifft, was insgesamt zu einer gleichmäßigen und homogenen Beaufschlagung des Lichtleiters 9 mit Licht führt, wie dies insbesondere anhand der Figuren 14 und 16 im Weiteren noch näher beschrieben werden wird.

In Abkehr zum Stand der Technik ist mit der erfindungsgemäßen Konstruktion nicht vorgesehen, dass von einer Lichtquelle 17 ausgehendes Licht stirnseitig des Lichtleiters 9 in diesen eingeleitet wird. Vielmehr erfolgt eine Beaufschlagung des Lichtleiters 9 mit Licht von dessen Rückseite her, das heißt von einer Lichtquelle 17 ausgehendes Licht wird über die rückseitige Eintrittsfläche 26 des Lichtleiters 9 in diesem eingespeist. Dies führt in vorteilhafter Weise zu einer homogenen Ausleuchtung des Lichtleiters 9, wobei insbesondere ungewollte Verschattungen und/oder Streifenbildungen innerhalb des Lichtleiters 9 vermieden sind.

Wie sich aus einer Zusammenschau der Figuren 14 und 15 ergibt, verfügt die Eintrittsfläche 26 des Lichtleiters 9 über eine Oberflächenstruktur 29, die nach Art eines Sägezahns ausgebildet ist. Die Oberflächenstruktur 29 ist als sog. Frensel-Struktur ausgebildet und verfügt über einander abwechselnde geradlinig verlaufende Flanken 32 einerseits und gekrümmte Flanken 31 andererseits, wie sich dies insbesondere aus der Darstellung nach Fig. 15 ergibt. Diese Oberflächenstruktur 29 sorgt dafür, dass von einer Lichtquelle 17 ausgehende Lichtstrahlen 30 gebrochen und in gestreutes Licht 35 aufgespalten werden, wie sich aus der Darstellung nach Fig. 15 ergibt. Dabei sorgt das gestreute Licht 35 für eine homogene Lichtverteilung innerhalb des Lichtleiters 9.

Wie sich aus Fig. 16 ergibt, gelangen ausgehend von der Lichtquelle 17 Lichtstrahlen 34 auch zu dem dem Lichtleiter 9 gegenüberliegenden Reflektor 14. An dessen Reflektorfläche 27 werden diese Lichtstrahlen 34 reflektiert, wobei das reflektierte Licht 36 von hinten, das heißt rückseitig des Lichtleiters 9 in den Lichtleiter 9 überführt wird. Auch hierdurch wird eine homogene Lichtverteilung innerhalb des Lichtleiters 9 unterstützt.

Wie sich des Weiteren aus einer Zusammenschau der Figuren 14 und 16 ergibt, verfügen sowohl der Lichtleiter 9 als auch der Reflektor 14 über eine Leitgeometrie 28 bzw. 33, wonach die Eintrittsfläche 26 bzw. die Reflektorfläche 27 mit Bezug auf die in den Figuren 14 und 16 dargestellten Lichtquellen 17 konkav bzw. hierzu ähnlich ausgebildet ist. Diese Ausgestaltung unterstützt eine homogene Lichtverteilung innerhalb des Lichtleiters 9, weil eine gleichmäßige Beschickung der rückseitigen Oberfläche des Lichtleiters 9 über die gesamte Längserstreckung des Lichtleiters 9 erfolgt. Es sind insofern keine Bereiche des Lichtleiters 9 vorgesehen, die im Vergleich zu anderen Bereichen mit mehr oder weniger Licht versorgt werden. Es findet vielmehr eine vergleichmäßigte Lichtverteilung statt, was die homogene Lichtverteilung innerhalb des Lichtleiters 9 zusätzlich begünstigt.

Wie sich aus den vorstehenden Darlegungen ergibt, wird bei der erfindungsgemäßen Konstruktion das von den Lichtquellen 17 ausgehende Licht nicht seitlich in den Lichtleiter 9 eingekoppelt, sondern das von den Lichtquellen 17 ausgehende Licht breitet sich zunächst im Luftverteilraum 22, das heißt im Raum zwischen Lichtleiter 9 und Reflektor 14 aus und wird erst dann vom Lichtleiter 9 eingefangen und in Richtung der Lichtaustrittsflächen 23 umgelenkt. Durch diese Lichtführung ist dem Umstand Rechnung getragen, dass einzelne Vorsprünge 12 bzw. Abschnitte 12 des Lichtleiters 9 durch lichtundurchlässige Bereiche des den Lichtleiter 9 aufnehmenden Blenden- bzw. Trägerelements 6 voneinander getrennt sind, was bei einer seitlichen Beschickung des Lichtleiters 9 mit Licht zu einer ungewollten Schattenbildung führen würde. Die erfindungsgemäße Konstruktion schließt solche nicht gewünschten Verschattungen konstruktionsbedingt aus.

Das Profil, das heißt die Oberflächenstruktur, über die das Licht eingefangen wird, folgt einer Leitgeometrie, die hinsichtlich des Lichtleiters 9 in drei Segmente mit unterschiedlichen Winkeln eingeteilt ist. Der Vorteil dabei ist, dass so gestreut werden kann, wieviel Licht über die Länge des Lichtleiters 9 eingefangen wird. Dadurch wird die winkelabhängige Intensitätsverteilung des abgestrahlten Lichts der LEDs 17 kompensiert. Das gleiche Prinzip gilt auch für den vorzugsweise weiß ausgebildeten Reflektor auf der Rückseite. Die Leitgeometrie ist hier in zwei Segmente mit unterschiedlichen Winkeln eingeteilt. Der Lichtverteilraum weitet sich so ausgehend von den LEDs zunächst aus und wird zur Mitte wieder eingeengt.

### Bezugszeichen

- 1: Spülkorb
- 2: Drahtschlaufe und/oder -abschnitt
- 3: Griffabschnitt
- 4: Korbgriff
- 5: Beleuchtungseinrichtung
- 6: Blendenelement/Trägerelement
- 7: Durchbruch
- 8: Gehäuse
- 9: Lichtleiter
- 10: Dichtung
- 11: Grundkörper
- 12: Vorsprung/Abschnitt
- 13: Rille
- 14: Reflektor
- 15: Platine
- 16: Beleuchtungseinheit
- 17: Lichtquelle/LEDs
- 18: Anschlussleitung
- 19: Dichtsteg
- 20: Dichtteil
- 21: Rasthaken
- 22: Luftverteilraum
- 23: Lichteintrittsfläche
- 24: Lichtaustrittsfläche
- 25: Austrittsfläche
- 26: Eintrittsfläche
- 27: Reflektorfläche
- 28: Leitgeometrie
- 29: Oberflächenstruktur
- 30: Lichtstrahl
- 31: Flanke
- 32: Flanke
- 33: Leitgeometrie
- 34: Lichtstrahl
- 35: gestreutes Licht
- 36: reflektiertes Licht
- 37: Frontseite
- 38: Rückseite
- 39: Haltekante

## Patentansprüche

1. Beleuchtungseinrichtung für einen Beladungskörper, insbesondere Spülkorb, einer Geschirrspülmaschine, mit einem plattenförmig ausgebildeten Blendenelement (6), das eine Frontseite (37) und eine Rückseite (38) aufweist, mit einem schalenförmig ausgebildeten Gehäuse (8), das unter Zwischenordnung einer Dichtung (10) rückseitig des Blendenelements (6) am Blendenelement (6) anliegt, und mit einem vom Gehäuse (8) aufgenommenen Lichtleiter (9) aus einem transparenten und/oder transluzenten Kunststoffmaterial, wobei das Blendenelement (6) Durchbrüche (7) aufweist, in die vom Lichtleiter (9) bereitgestellte Vorsprünge (12) formschlüssig eingreifen.

2. Beleuchtungseinrichtung nach Anspruch 1, **dadurch gekennzeichnet, dass** die Vorsprünge (12) mit der Frontseite (37) des Blendenelements (6) bündig abschließen.

3. Beleuchtungseinrichtung nach Anspruch 1 oder 2, **dadurch gekennzeichnet, dass** die formschlüssige Aufnahme der lichtleiterseitigen Vorsprünge (12) durch die blendenelementseitigen Durchbrüche (7) wasserdicht ausgebildet ist.

4. Beleuchtungseinrichtung nach einem der vorhergehenden Ansprüche, **dadurch gekennzeichnet, dass** das Blendenelement (6) und der Lichtleiter (9) stoffschlüssig oder quasi stoffschlüssig miteinander verbunden sind.

5. Beleuchtungseinrichtung nach Anspruch 4, **dadurch gekennzeichnet, dass** das Blendenelement (6) und der Lichtleiter (9) als Zwei-Komponenten-Kunststoffspritzgussteil ausgebildet sind.

6. Beleuchtungseinrichtung nach einem der vorhergehenden Ansprüche, **dadurch gekennzeichnet, dass** das Gehäuse (8) eine Platine (15) beherbergt, die eine mit dem Lichtleiter (9) zusammenwirkende LED (17) aufweist.

7. Beleuchtungseinrichtung nach einem der vorhergehenden Ansprüche, **dadurch gekennzeichnet, dass** die Dichtung (10) ein Formteil aus Silikon oder eine blendenelementseitig auf das Gehäuse (8) aufgebrachte Kleberaupe ist.

8. Beleuchtungseinrichtung nach einem der vorhergehenden Ansprüche, **dadurch gekennzeichnet, dass** das Gehäuse (8) eine abgedichtete Kabeldurchtrittsöffnung aufweist.

9. Beleuchtungseinrichtung nach einem der vorhergehenden Ansprüche, **dadurch gekennzeichnet, dass** der Lichtleiter (9) eine Rastkontur zur auswechselbaren Anordnung des Gehäuses (8) trägt.

10. Beleuchtungseinrichtung nach einem der vorhergehenden Ansprüche, **dadurch gekennzeichnet, dass** das Blendenelement (6) aus einem lichtundurchlässigen Kunststoffmaterial gebildet ist.

11. Beleuchtungseinrichtung, **gekennzeichnet durch** einen mit dem Lichtleiter (9) zusammenwirkenden Reflektor (14).

12. Beleuchtungseinrichtung nach Anspruch 11, **dadurch gekennzeichnet, dass** der Lichtleiter (9) und der Reflektor (14) unter Ausbildung eines Lichtverteilraums (22) beabstandet voneinander im Gehäuse (8) angeordnet sind.

13. Beleuchtungseinrichtung nach einem der vorhergehenden Ansprüche, **dadurch gekennzeichnet, dass** ein vom Lichtleiter (9) bereitgestellter Vorsprung (12) eine Lichtaustrittsfläche (24) und eine der Lichtaustrittsfläche (24) gegenüberliegende Lichteintrittsfläche (23) aufweist, wobei die Vielzahl von Lichtaustrittsflächen (24) eine gemeinsame Austrittsfläche (25) und die Vielzahl von Lichteintrittsflächen (23) eine gemeinsame Eintrittsfläche (26) bilden.

14. Beleuchtungseinrichtung nach Anspruch 13, **dadurch gekennzeichnet, dass** die Eintrittsfläche (26) des Lichtleiters (9) und/oder die Reflektorfläche (27) des Reflektors (14) mit Bezug auf eine mit dem Lichtverteilraum (22) zusammenwirkende LED (17) konkav ausgebildet sind / ausgebildet ist.

15. Beleuchtungseinrichtung nach Anspruch 13 oder 14, **dadurch gekennzeichnet, dass** die Eintrittsfläche (26) des Lichtleiters (9) oberflächenstrukturiert ausgebildet ist.
